# EUROPÄISCHE PATENTSCHRIFT

(11) **EP 1 425 535 B1**
(45) Veröffentlichungstag und Bekanntmachung des Hinweises auf die Patenterteilung: **08.03.2006**
(21) Anmeldenummer: 02760331.5
(22) Anmeldetag: 09.09.2002
(51) Int. Cl.: F16M 13/04

(54) **KARDANISCHE AUFHÄNGEVORRICHTUNG FÜR EINE KAMERA-BALANCE-VORRICHTUNG**
CARDANIC SUSPENSION DEVICE FOR A CAMERA BALANCE DEVICE
DISPOSITIF DE SUSPENSION A CARDAN DESTINE A UN DISPOSITIF D'EQUILIBRAGE DE CAMERA

(30) Priorität: 13.09.2001 DE 10145198
(43) Veröffentlichungstag der Anmeldung: 09.06.2004
(73) Patentinhaber: Sachtler GmbH & Co. KG, 85386 Eching (DE)
(72) Erfinder: SCHALLER, Curt, O., 81541 München (DE)
(74) Vertreter: HOFFMANN EITLE
(86) Internationale Anmeldenummer: PCT/EP2002/010095
(87) Internationale Veröffentlichungsnummer: WO 2003/023274

(56) Entgegenhaltungen:
- DE-U- 20 112 779
- US-A- 4 158 488
- US-A- 5 579 071
- US-A- 5 797 054

## Beschreibung

### Technisches Gebiet

Die vorliegende Erfindung betrifft eine kardanische Aufhängevorrichtung für eine Kamera-Balance-Vorrichtung gemäß dem Oberbegriff des Anspruchs 1.

Solche Kamera-Balance-Vorrichtungen dienen zum Ausbalancieren von Video- und Filmkameras, die von einem Kameramann manuell geführt werden und dabei über eine Aufhängevorrichtung beispielsweise mit einem Federarm einer westenartigen Tragvorrichtung (sog. Körperstativ) verbunden sind, die ihrerseits am Körper des Kameramanns befestigt wird.

Die Aufhängevorrichtung soll dabei verhindern, dass sich Neige- und Kippbewegungen sowie Schwingungen und Schrittbewegungen von dem Körper des Kameramanns auf die Kamera übertragen, denn es sollte stets eine gleichbleibende Ausrichtung der Kamera gewährleistet und ein Neigen, Kippen oder Schwingen der Kamera vermieden werden. Alternativ kann die an der Balance-Vorrichtung angebrachte Kamera mittels der Aufhängevorrichtung auch an einem Standstativ, Dolly, Kran etc. befestigt werden, wobei die Aufhängevorrichtung dann verhindern kann, dass sich beispielsweise Unebenheiten des Untergrunds auf die Lage der Kamera auswirken.

Dazu ist die Aufhängevorrichtung so ausgestaltet, dass der Aufbau aus Kamera und Balancesystem bezüglich des Stativs eine Pendelbewegung ausführen kann. Dieser Aufbau ist darüber hinaus mit Kontergewichten verbunden. Bei geeigneter Wahl und Positionierung dieser Kontergewichte wird die Kamera so ausbalanciert, dass sich Neige- und Kippbewegungen, Schwingungen und Schrittbewegungen nicht von dem Körperstativ, Standstativ, Dolly, Kran o.ä. auf die Kamera übertragen.

### Stand der Technik

Bei einer bekannten Kamera-Balance-Vorrichtung ist die Kamera an einem Ende eines Pendelarms angebracht, an dessen anderem Ende die Kontergewichte befestigt sind. Als Kontergewichte werden beispielsweise Akkus verwendet, die gleichzeitig als Energiespeicher dienen.

Der Pendelarm ist mit einer kardanischen Aufhängevorrichtung verbunden, die ihrerseits beispielsweise an einem Federarm eines Körperstativs, einem Stativ, Dolly oder Kran befestigbar ist.

In der kardanischen Aufhängung des Kameraaufbaus bezüglich des Stativs sind dabei drei Bewegungsachsen realisiert: Die Aufhängevorrichtung weist zwei einander kreuzende Gelenkachsen (Kardanachsen) auf, von denen im Betrieb eine vertikal (lotrecht) und die andere horizontal verläuft, sowie eine Drehachse, die durch die vertikale Gelenkachse verläuft und senkrecht zur horizontalen Gelenkachse liegt. Ein gelenkausgangsseitiges Befestigungselement ist um die vertikale Gelenkachse drehbar und dient zum Befestigen der kardanischen Aufhängevorrichtung an dem Pendelarm der Kamera-Balance-Vorrichtung, und ein gelenkeingangsseitiges Befestigungselement, das um die Drehachse drehbar ist, dient zum Befestigen der kardanischen Aufhängevorrichtung an einem Stativ, insbesondere an dem oben genannten Körperstativ oder auch an einem Standstativ.

US 5,797,054 A offenbart eine kardanische Aufhängevorrichtung gemäß dem Oberbegriff des Patentanspruchs 1.

### Darstellung der Erfindung

Die der vorliegenden Erfindung zugrunde liegende Aufgabe liegt darin, eine verbesserte kardanische Aufhängung für eine Kamera-Balance-Vorrichtung zu schaffen, bei der die Balanceeinstellung über einen weiten Bewegungsbereich der Kamera aufrecht erhalten bleibt.

Diese Aufgabe wird gelöst durch eine kardanische Aufhängevorrichtung gemäß dem Patentanspruch 1. Demzufolge ist zwischen dem gelenkeingangsseitigen und dem gelenkausgangsseitigen Befestigungselement eine zentriereinrichtung vorgesehen, mit der die vertikale Gelenkachse und die Drehachse relativ zueinander ortsveränderbar sind. Die vertikale Gelenkachse und die Drehachse können daher gegeneinander verschoben werden, bis die Drehachse die vertikale Gelenksachse exakt schneidet.

Der Erfindung liegt die Erkenntnis zugrunde, dass kleinste Abweichungen in der Zentrierung des gelenkeingangsseitigen bezüglich des gelenkausgangsseitigen Befestigungselements zu erheblichen Beeinflussungen der mittels der Kontergewichte eingestellten Balance führen. Solche Abweichungen in der Zentrierung führen zu wesentlichen Fehlern in der Kameraführung, insbesondere wenn diese bei höheren Geschwindigkeiten erfolgt.

Daher ist es von besonderer Bedeutung, dass im Bereich des Kardangelenks, wo die beiden Gelenkachsen sowie die Drehachse zusammentreffen, eine exakte Zentrierung (im Bereich von einigen hundertstel Millimetern) der beiden Befestigungselemente bezüglich einander gewährleistet ist. Eine solche exakte Zentrierung ist bei Bauteilen mit fester relativer Position zueinander nur sehr schwierig und kostenaufwändig zu realisieren.

Erfindungsgemäß wird die Zentrierung durch die Verschiebbarkeit der Drehachse bezüglich der vertikalen Gelenkachse möglich.

Durch die erfindungsgemäße Zentrierung ist gewährleistet, dass eine mittels der Kontergewichte eingestellte Balance beispielsweise auch dann erhalten bleibt, wenn sich der Kameraaufbau um 360° bezüglich des Stativs dreht oder der Kameramann mit der Aufhängevorrichtung eine Bewegung über 360° vornimmt. Erfolgt die Zentrierung nicht genau , so treten bereits bei Drehungen um weniger als 180° an gewissen Stellen Balanceabweichungen auf, die insbesondere bei schnellen Bewegungen zu einer fehlerhaften Kameraführung führen.

Vorteilhafte Weiterbildungen der erfindungsgemäßen kardanischen Aufhängevorrichtung ergeben sich aus den Unteransprüchen.

In einer vorteilhaften Ausgestaltung der Erfindung ist die vertikale Gelenkachse entlang der Achsenerstreckung der horizontalen Gelenkachse verschiebbar. Dabei kann die Verschiebung der vertikalen Gelenkachse mittels zumindest einer Stellschraube erfolgen. Eine besonders bevorzugte Ausführungsform weist zwei Stellschrauben auf, deren Längsachsen sich entlang der horizontalen Gelenkachse erstrecken. Ebenso ist es jedoch denkbar, nur eine Stellschraube und ein ihr gegenüberliegend angeordnetes Federdrucklager vorzusehen, so dass die Verstellung durch die Verdrehung dieser Stellschraube erfolgt.

Die erfindungsgemäße Aufhängevorrichtung kann außerdem im Bereich der vertikalen und horizontalen Gelenkachse eine zweite Zentriereinrichtung aufweisen, mittels derer die Relativposition zwischen dem ausgangsseitigen Befestigungselement und der Kamera-Balance-Vorrichtung in diesem Bereich spielfrei festlegbar ist. In diesem Fall erfolgt die Zentrierung in zweifacher Art und Weise: mittels einer Zentriereinrichtung, die vorzugsweise durch zwei Stellschrauben gebildet wird, sind die vertikale Gelenkachse und die Drehachse bezüglich einander verschiebbar, vorzugsweise entlang der horizontalen Gelenkachse. Mittels der zweiten Zentriereinrichtung kann zusätzlich die Relativposition zwischen dem gelenkausgangsseitigen Befestigungselement und der Kamera-Balance-Vorrichtung im Bereich der beiden Gelenkachsen spielfrei festgelegt werden.

Die Befestigung des ausgangsseitigen Befestigungselements an der Kamera-Balance-Vorrichtung erfolgt vorzugsweise mittels einer Klemmeinrichtung, die so angeordnet ist, dass die Klemmeinrichtung und die zweite Zentriereinrichtung sich an voneinander beabstandeten Stellen und vorzugsweise an entgegengesetzten Enden des gelenkausgangsseitigen Befestigungselements befinden. Die Klemmeinrichtung für die Befestigung der Aufhängevorrichtung an dem Pendelarm der Kamera-Balance-Vorrichtung befindet sich dann möglichst weit entfernt von der kardanischen Aufhängung, damit der Klemmvorgang nicht zu einer Dezentralisierung des Kardangelenks hinsichtlich der drei Achsen führen kann.

In einer vorteilhaften Weiterbildung der erfindungsgemäßen kardanischen Aufhängevorrichtung sind das gelenkeingangsseitige und/oder das gelenkausgangsseitige Befestigungselement als Handgriff ausgebildet. Mittels des gelenkeingangsseitigen Handgriffs kann die Aufhängevorrichtung an einem Federarm der Weste des Kameramanns, einem Stativ o.ä. angebracht werden. Der gelenkausgangsseitige Handgriff dient neben der Handhabung auch dem Aufsetzen der Aufhängevorrichtung auf den Pendelarm der Kamera-Balance-Vorrichtung.

Die zweite Zentriereinrichtung kann verstellbar, vorzugsweise stufenlos verstellbar ausgestaltet sein.

In einer vorteilhaften Weiterbildung ist das gelenkausgangsseitige Befestigungselement als gerades Rohrstück ausgebildet. Es kann in diesem Fall über den entsprechend gestalteten Pendelarm der Kamera-Balance-Vorrichtung hinüber gleiten. Vorzugsweise ist die Aufhängevorrichtung an der Kamera-Balance-Vorrichtung bzw. an dem Pendelarm verschiebbar angeordnet, um bezüglich Kamera und Gegengewichten eine Lageveränderung vorzunehmen.

Das Rohrstück kann dabei beispielsweise einen kreisförmigen Querschnitt haben. Ebenso denkbar ist eine rechteckige oder quadratische Ausgestaltung.

Die zweite Zentriervorrichtung wird in einer vorteilhaften Ausgestaltung durch einen Stellring gebildet, der mit einem Klemmkonus versehen ist, der seinerseits mit einem Klemmring zusammenwirkt. Falls das gelenkausgangsseitige Befestigungselement, wie oben beschrieben, als Rohrstück mit kreisförmigem Querschnitt ausgestaltet ist, kann der Stellring in ein Ende des Rohrstücks einschraubbar sein und mit einem an der Kamera-Balance-Vorrichtung angeordneten Klemmring zusammenwirken.

Der Klemmring besteht vorzugsweise aus Kunststoff. Er kann jedoch ebenso aus Metall, Keramik, einem Kompositmaterial oder einer Kombination aus diesen Materialien bestehen. Vorzugsweise ist zumindest ein Schlitz darin ausgebildet, um die Verformbarkeit und die Anpassbarkeit an den darin verlaufenden Pendelarm der Kamera-Balance-Vorrichtung zu steigern.

Der Stellring besteht seinerseits vorzugsweise aus Metall, kann jedoch auch aus Kunststoff, Keramik, einem Kompositmaterial oder einer Kombination aus diesen Materialien bestehen.

### Kurze Beschreibung der Zeichnungen

Im folgenden wird die Erfindung anhand einer beispielhaft in den Zeichnungen dargestellten Ausführungsform genauer erläutert.

Im einzelnen zeigen:
- Fig. 1: eine Gesamtansicht eines Kamera-Balancesystems und einer erfindungsgemäßen kardanischen Aufhängevorrichtung;
- Fig. 2: eine Detailansicht der erfindungsgemäßen kardanische Aufhängevorrichtung;
- Fig. 3: eine Seitenansicht der erfindungsgemäßen kardanischen Aufhängevorrichtung, teilweise im Schnitt; und
- Fig. 4: eine Draufsicht der erfindungsgemäßen kardanischen Aufhängevorrichtung, teilweise im Schnitt.

### Ausführliche Beschreibung einer bevorzugten Ausführungsform

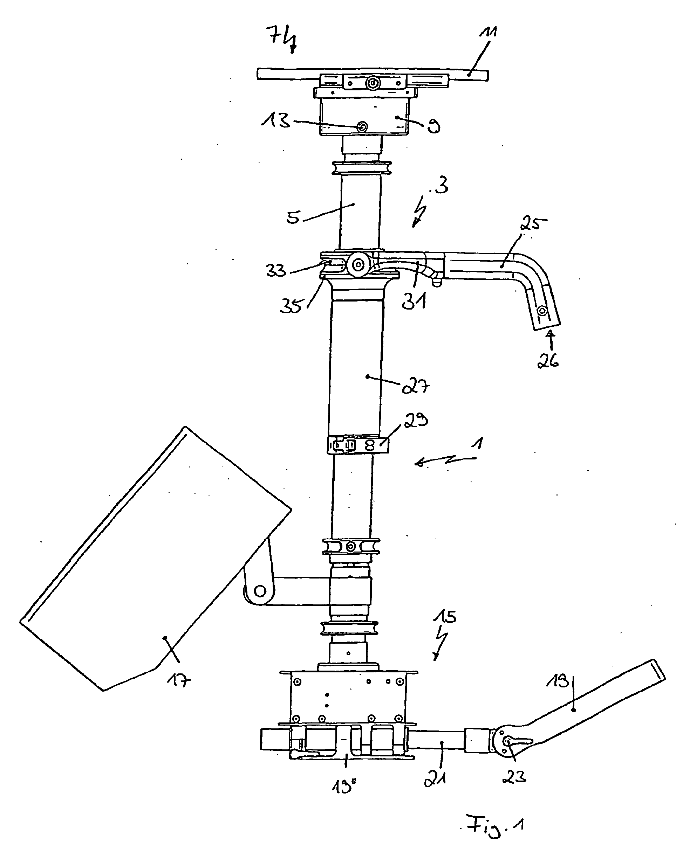

Die Fig. 1 zeigt eine Kamera-Balance-Vorrichtung 1 samt einer erfindungsgemäßen kardanischen Aufhängevorrichtung 3.

Die Kamera-Balance-Vorrichtung weist ein Pendelrohr 5 auf. Am oberen Ende des Pendelrohrs 5 befindet sich eine Kamera-Befestigungsvorrichtung 7, die im Wesentlichen aus einer Basis 9 und einer Halteplatte 11 besteht, auf der eine Kamera anbringbar ist, wobei die Halteplatte 11 bezüglich der Basis 9 über Stellschrauben 13 (von denen hier nur eine sichtbar ist) verschiebbar ist, und zwar in die Zeichenebene der Fig. 1 hinein bzw. aus dieser Ebene heraus. Weitere Stellschrauben (nicht dargestellt) sind vorgesehen, um die Halteplatte 11 bezüglich der Basis 9 nach rechts und links in Fig. 1 zu bewegen. Am unteren Ende des Pendelrohrs 5 befindet sich eine Aufnahmevorrichtung 15 für Kontergewichte. In dieser Ausführungsform sind eine Monitor-Halterung 17 vorgesehen sowie zwei Trägerplatten 19, 19" zur Aufnahme von Kontergewichten, die beispielsweise durch Akkumulatoren gebildet werden. Die Trägerplatte 19 ist an Gleitrohren 21 (von denen nur eins sichtbar ist) verschiebbar und fixierbar angebracht und ist außerdem schwenkbar bezüglich des Gleitrohrs 21; die Arretierung der Trägerplatte 19 in der gewünschten Winkelstellung erfolgt mittels eines Klemmhebels 23.

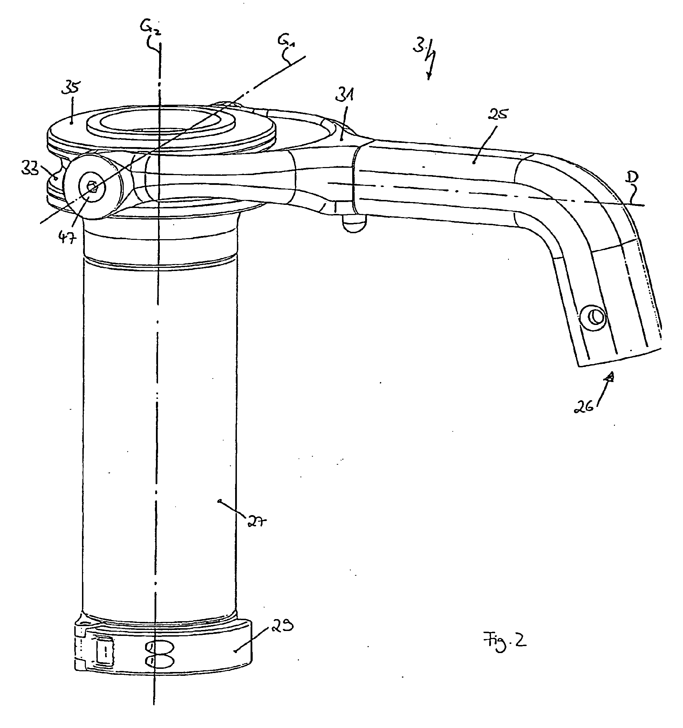

Der Aufbau aus Pendelrohr 5, Kamera-Haltevorrichtung 7 und Aufnahmevorrichtung 15 für Kontergewichte ist nun in einer erfindungsgemäßen Aufhängevorrichtung 3 kardanisch aufgehängt. Diese Aufhängevorrichtung 3 ist in den Fig. 2 bis 4 genauer dargestellt und weist einen ersten Handgriff 25 als gelenkeingangsseitiges Befestigungselement und einen zweiten Handgriff 27 als gelenkausgangsseitiges Befestigungselement auf. Der erste Handgriff 25 dient zur Anbringung der Aufhängevorrichtung an einem Stativ, insbesondere an einem Körperstativ, das von einem Kameramann getragen wird. Dazu weist der gelenkeingangsseitige Handgriff eine Bohrung 26 auf, mittels derer er auf einen Zapfen eines Standstativs oder einen Federarm einer Weste aufgesetzt werden kann. Der zweite Handgriff 27 dient zur Anbringung der Aufhängevorrichtung 3 an der Kamera-Balance-Vorrichtung 1. Dazu ist der zweite Handgriff 27 rohrförmig ausgestaltet und um das Pendelrohr 5 der Kamera-Balance-Vorrichtung 1 herum angeordnet, so dass er bezüglich des Pendelrohrs 5 verschiebbar ist. Die Arretierung des zweiten Handgriffs 27 bezüglich des Pendelrohrs 5 erfolgt über eine Klemmeinrichtung 29.

Mittels der beiden Handgriffe 25, 27 kann ein Kameramann den mittels des ersten Handgriffs 25 beispielsweise an einem Federarm eines Körperstativs, einem Stativs, Dolly oder Kran befestigten Aufbau beidhändig führen.

In der gelenkigen Verbindung zwischen dem ersten Handgriff 25 und dem zweiten Handgriff 27 sind drei Bewegungsachsen realisiert: Der erste Handgriff 25 ist mit einem Gabelelement 31 so verbunden, dass er bezüglich dieses Gabelelements 31 um eine Drehachse D drehbar ist, die der Längsachse eines geraden, in Fig. 1 waagerecht verlaufenden Abschnitts des ersten Handgriffs 25 entspricht. Das Gabelelement 31 ist seinerseits um eine waagerechte Gelenkachse G₁ (erste Kardanachse) schwenkbar mit einem Gelenk-Außenring 33 verbunden. Dieser Gelenk-Außenring 33 ist seinerseits um eine vertikale Gelenkachse G₂ (zweite Kardanachse) herum drehbar mit einem Gelenk-Innenring 35 gekoppelt, der seinerseits fest mit dem zweiten Handgriff 27 verbunden ist, der über die Klemmeinrichtung 29 an dem Pendelrohr 5 der Kamera-Balance-Vorrichtung 1 befestigt wird. Somit ist der erste Handgriff 25, der mit dem Stativ verbindbar ist, bezüglich des mit dem Pendelrohr 5 verbundenen zweiten Handgriffs 27 um die Drehachse D drehbar, um die waagerechte Gelenkachse G₁ schwenkbar und um die vertikale Gelenkachse G₂ drehbar gelagert.

Mittels der gelenkigen Aufhängevorrichtung 3 soll nun verhindert werden, dass sich Bewegungen des Stativs, beispielsweise des Körperstativs, auf die an der Halteplatte 11 angebrachte Kamera übertragen. Dazu muss der Aufbau aus Pendelrohr 5, Kamera-Haltevorrichtung 7 und Kontergewichten an der Aufnahmevorrichtung 15 balanceausgeglichen positioniert sein. Um diesen Balanceausgleich insbesondere auch für verschiedene Kameratypen mit unterschiedlichem Gewicht und unterschiedlicher Schwerpunktlage realisieren zu können, verfügt die Kamera-Balance-Vorrichtung 1 über eine Vielzahl von Einstellmöglichkeiten. Insbesondere wird die. Balance des Systems durch das Vorsehen von unterschiedlich schweren Kontergewichten an der Aufnahmevorrichtung 15 erzielt. Wie oben bereits erwähnt, ist außerdem die Trägerplatte 19 für Kontergewichte schwenkbar und verschiebbar gelagert. Gleiches kann für die Monitor-Haltevorrichtung 17 gelten. Die dargestellte Ausführungsform weist als Aufnahmevorrichtung 15 für Kontergewichte die Monitor-Halterung 17 und zwei Trägerplatten 19, 19" auf; ebenso ist es selbstverständlich denkbar, an verschiedenen Stellen des Pendelrohrs 5 weitere Anbringmöglichkeiten für Kontergewichte vorzusehen.

Wie oben ebenfalls bereits erwähnt, kann außerdem mittels der Stellschrauben 13 der Schwerpunkt der auf der Halteplatte 11 befindlichen Kamera (nicht dargestellt) bezüglich der mit dem Pendelrohr 5 verbundenen Basis 9 verschoben werden. Ein noch flexibleres System entsteht, wenn das Pendelrohr 5 teleskopierbar ausgestaltet wird.

Kleinste Abweichungen in der Zentrierung der kardanischen Aufhängevorrichtung 3, genauer des Gelenk-Innenrings 35, bezüglich des Pendelrohrs 5 führen zu erheblichen Beeinflussungen der mittels der Kontergewichte eingestellten Balance. Solche Abweichungen in der Zentrierung können beispielsweise durch Toleranzabweichungen im Außendurchmesser des Pendelrohrs 5 hervorgerufen werden und führen zu wesentlichen Fehlern in der Kameraführung, insbesondere wenn diese bei höheren Geschwindigkeiten erfolgt.

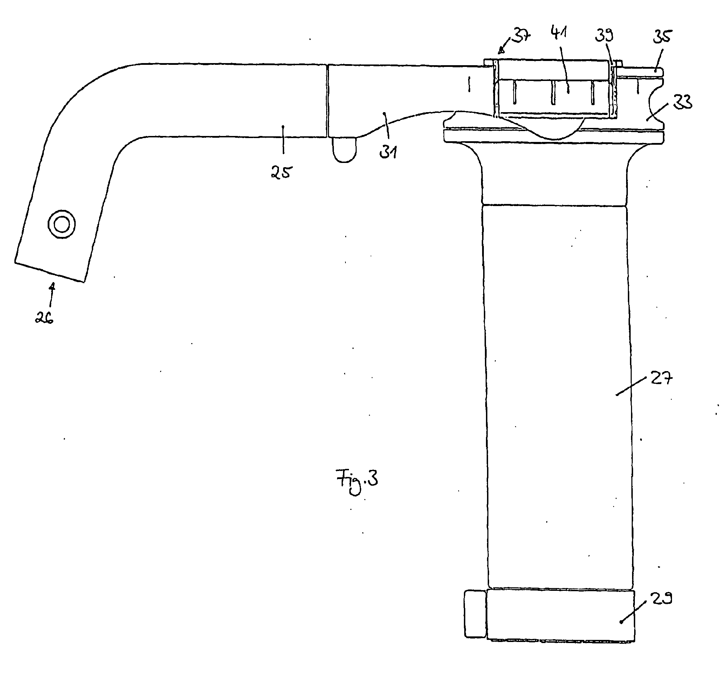

Aus diesem Grund weist die erfindungsgemäße Aufhängevorrichtung einerseits eine Zentriereinrichtung 37 auf, mit der die Relativposition zwischen dem zweiten Handgriff 27 und dem Pendelrohr 5 spielfrei festlegbar ist. Fig. 3 verdeutlicht diese Zentriereinrichtung 37, die im Bereich der beiden sich kreuzenden Gelenkachsen G₁ und G₂ vorgesehen ist. Die Zentriereinrichtung 37 und die Klemmeinrichtung 29, die zur Befestigung des zweiten Handgriffs 27 an dem Pendelrohr 5 dient, befinden sich daher an entgegengesetzten Enden des zweiten Handgriffs 27. Durch die Beabstandung dieser Klemmeinrichtung 29 von der Zentriereinrichtung 37 wird verhindert, dass die Klemmung der Klemmeinrichtung 29 die zentriereinrichtung 37 nachteilig beeinflusst, d.h. zu einer Dezentralisierung der Aufhängevorrichtung 3 hinsichtlich der beiden Gelenkachsen G₁ und G₂ und der Drehachse D führt.

Die erfindungsgemäße Zentriereinrichtung 37 weist einen mit einem Gewinde versehenen Stellring 39 auf, welcher in den Gelenk-Innenring 35 eingeschraubt ist. In dieser Ausgestaltung ist die Zentriereinrichtung 37 aufgrund des Gewindes stufenlos verstellbar. Dieser Stellring 39 ist innen mit einem Konus versehen, der auf einen Gegenkonus eines geschlitzten Klemmrings 41 aus Kunststoff drückt, der an dem Pendelrohr 5 vorgesehen ist. Die Zentrierung der beiden Elemente wird daher durch die Zusammenwirkung des Konus' des Stellrings 39 mit dem Konus des Klemmrings 41 bewirkt. Der Stellring 39 besteht seinerseits vorzugsweise aus Metall.

Wenn der zweite Handgriff 27 auf das Pendelrohr 5 aufgeschoben ist und dieses sich in der gewünschten Position befindet, so erfolgt das Befestigen des Handgriffs 27 weit entfernt von den Gelenkachsen G₁, G₂ durch die Klemmeinrichtung 29, und die zentrierung erfolgt über den Stellring 39 und den Klemmring 41. Damit wird jedes Spiel ausgeschlossen, und an dieser Stelle erfolgt eine sichere und gute Zentrierung der Aufhängevorrichtung 3 bezüglich des Pendelrohrs 5. Außerdem erfolgt an dieser Stelle ebenfalls eine Befestigung der Aufhängevorrichtung 3 an dem Pendelrohr 5. Der Stellring 39 und der Klemmring 41 dienen jedoch vorrangig der Zentrierung und erst nachrangig der Befestigung.

In der erfindungsgemäßen Anordnung sind außerdem sowohl die Klemmeinrichtung 29 als auch die Zentriereinrichtung 37 gut zugänglich.

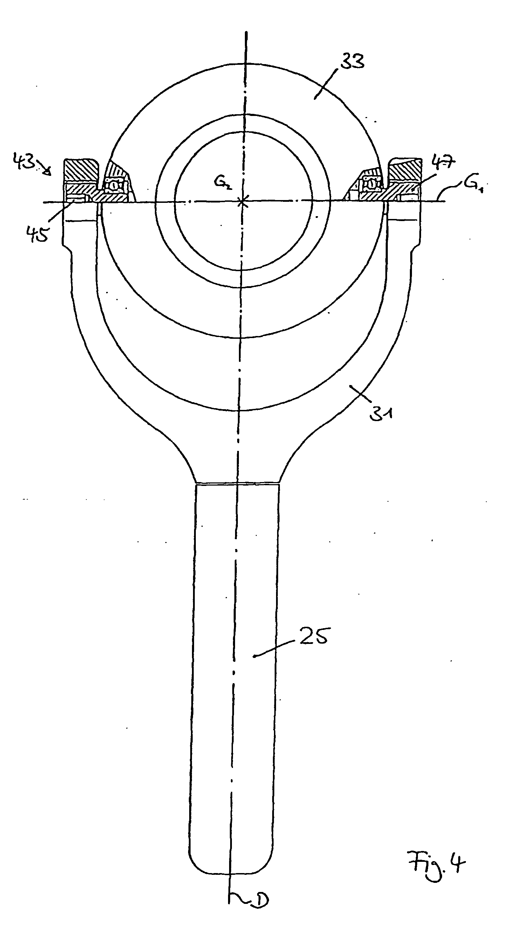

Die erfindungsgemäße Aufhängevorrichtung 3 weist außerdem eine weitere Zentriereinrichtung 43 auf, die nun mit Bezug auf Fig. 4 beschrieben wird. Diese weitere Zentriereinrichtung 43 dient dazu, die vertikale Gelenkachse G2 relativ zur Drehachse D zu verschieben und so das Pendelrohr 5 der Kamera-Balance-Vorrichtung 1 bezüglich des Gabelelements 31 der erfindungsgemäßen Aufhängevorrichtung 3 zu zentrieren. In der dargestellten Ausführungsform ist diese Zentriereinrichtung 43 durch zwei Stellschrauben 47 realisiert, die mittels sehr feingängiger Gewinde in das Gabelelement 31 eingeschraubt und außerdem schwenkbar bezüglich des Gelenk-Außenrings 33 gelagert sind. Diese Stellschrauben realisieren so die Verbindung des Gabelelements 31 mit dem Gelenk-Außenring 33. Die Stellschrauben 47 weisen Einführöffnungen 45 für ein Werkzeug auf. Durch Drehung der Stellschrauben 47 erfolgt die Zentrierung des Gabelelements 31 bezüglich des Pendelrohrs 5 durch eine Verschiebung des Gewinde-Außenrings 33 und somit der vertikalen Gelenkachse G₂ entlang der waagerechten Gelenkachse G₁ bezüglich des Gabelelements 31 und somit bezüglich der Drehachse D. Die feingängigen Gewinde der Stellschrauben 47 erlauben dabei eine Einstellung im Bereich von hundertstel Millimetern. Der Gelenk-Außenring 33 und somit das Pendelrohr 5 kann so exakt zentral bezüglich des Gabelelements 31 angeordnet werden.

Eine der beiden Stellschrauben 47 kann auch durch ein Federdrucklager ersetzt werden.

Die Zentriereinrichtung 43 schafft so ergänzend zu der Zentriereinrichtung 37 eine weitere Verbesserung in der Ausrichtung der erfindungsgemäßen Aufhängevorrichtung 3 bezüglich der Kamera-Balance-Vorrichtung 1.

## Patentansprüche

1. Kardanische Aufhängevorrichtung (3) für eine Kamera-Balance-Vorrichtung (1)
mit zwei einander kreuzenden Gelenkachsen (G₁, G₂), von denen im Betrieb eine (G₂) vertikal und die andere (G₁) horizontal verläuft, sowie mit einer Drehachse (D), die durch die vertikale Gelenkachse (G₂) verläuft und senkrecht zur horizontalen Gelenkachse (G₁) liegt,
mit einem gelenkausgangsseitigen Befestigungselement (27), das um die vertikale Gelenkachse (G₂) drehbar ist, zum Befestigen der kardanischen Aufhängevorrichtung (3) an der Kamera-Balance-Vorrichtung (1), und
mit einem gelenkeingangsseitigen Befestigungselement (25), das um die Drehachse (D) drehbar ist, zum Befestigen der kardanischen Aufhängung (3) an einem Stativ,
**dadurch gekennzeichnet, dass**
zwischen dem gelenkeingangsseitigen (25) und dem gelenkausgangsseitigen Befestigungselement (27) eine zentriereinrichtung (43) vorgesehen ist, mit der die vertikale Gelenkachse (G₂) und die Drehachse (D) relativ zueinander ortsveränderbar sind.

2. Kardanische Aufhängevorrichtung (3) nach Anspruch 1, **dadurch gekennzeichnet, dass** die vertikale Gelenkachse (G₂) entlang der Achsenerstreckung der horizontalen Gelenkachse (G₁) verschiebbar ist.

3. Kardanische Aufhängevorrichtung (3) nach Anspruch 1 oder 2, **dadurch gekennzeichnet, dass** die Verschiebung der vertikalen Gelenkachse (G₂) mittels zumindest einer Stellschraube (47) erfolgt.

4. Kardanische Aufhängevorrichtung (3) nach Anspruch 3, **dadurch gekennzeichnet, dass** die Verschiebung der vertikalen Gelenkachse (G₂) mittels zweier Stellschrauben (47) erfolgt, deren Längsachsen sich entlang der horizontalen Gelenkachse (G₁) erstrecken.

5. Kardanische Aufhängevorrichtung (3) nach einem der vorangehenden Ansprüche, **dadurch gekennzeichnet, dass** im Bereich der vertikalen (G₂) und horizontalen Gelenkachse (G₁) eine zweite Zentriereinrichtung (37) vorgesehen ist, mittels derer die Relativposition zwischen dem ausgangsseitigen Befestigungselement (27) und der Kamera-Balance-Vorrichtung (1) in diesem Bereich spielfrei festlegbar ist.

6. Kardanische Aufhängevorrichtung (3) nach Anspruch 5, **dadurch gekennzeichnet, dass** die Befestigung des ausgangsseitigen Befestigungselements (27) an der Kamera-Balance-Vorrichtung (1) mittels einer Klemmeinrichtung (29) erfolgt, die so angeordnet ist, dass die Klemmeinrichtung (29) und die zweite Zentriereinrichtung (37) sich an voneinander beabstandeten Stellen, vorzugsweise an entgegengesetzten Enden, des gelenkausgangsseitigen Befestigungselements (27) befinden

7. Kardanische Aufhängevorrichtung (3) nach einem der vorangehenden Ansprüche, **dadurch gekennzeichnet, dass** das gelenkeingangsseitige Befestigungselement (25) als Handgriff ausgebildet ist.

8. Kardanische Aufhängevorrichtung (3) nach einem der vorangehenden Ansprüche, **dadurch gekennzeichnet, dass** das gelenkausgangsseitige Befestigungselement (27) als Handgriff ausgebildet ist.

9. Kardanische Aufhängevorrichtung nach einem der Ansprüche 5 bis 8, **dadurch gekennzeichnet, dass** die zweite Zentriereinrichtung (37) verstellbar ausgestaltet ist.

10. Kardanische Aufhängevorrichtung nach Anspruch 9, **dadurch gekennzeichnet, dass** die zweite Zentriereinrichtung (37) stufenlos verstellbar ausgestaltet ist.

11. Kardanische Aufhängevorrichtung (3) nach einem der vorangehenden Ansprüche, **dadurch gekennzeichnet, dass** das gelenkausgangsseitige Befestigungselement (27) als gerades Rohrstück ausgebildet ist.

12. Kardanische Aufhängevorrichtung (3) nach Anspruch 11, **dadurch gekennzeichnet, dass** das Rohrstück einen kreisförmigen Querschnitt hat.

13. Kardanische Aufhängevorrichtung (3) nach einem der Ansprüche 5 bis 12, **dadurch gekennzeichnet, dass** die zweite Zentriervorrichtung (37) durch einen Stellring (39) gebildet wird, der mit einem Klemmkonus versehen ist, der seinerseits mit einem Klemmring (41) zusammenwirkt.

14. Kardanische Aufhängevorrichtung (3) nach einem der Ansprüche 11 und 12, **dadurch gekennzeichnet, dass** die zweite Zentriervorrichtung (37) durch einen Stellring (39) gebildet wird, der in ein Ende des Rohrstücks (27) einschraubbar ist und der mit einem Klemmkonus versehen ist, der seinerseits mit einem an der Kamera-Balance-Vorrichtung (1) angeordneten Klemmring (41) zusammenwirkt.

15. Kardanische Aufhängevorrichtung (3) nach einem der Ansprüche 13 und 14, **dadurch gekennzeichnet, dass** der Klemmring (41) aus Kunststoff, Metall, Keramik, einem Kompositmaterial oder einer Kombination aus diesen Materialien besteht.

16. Kardanische Aufhängevorrichtung (3) nach einem der Ansprüche 13 bis 15, **dadurch gekennzeichnet, dass** im Klemmring (41) zumindest ein Schlitz ausgebildet ist.

17. Kardanische Aufhängevorrichtung (3) nach einem der Ansprüche 13 bis 16, **dadurch gekennzeichnet, dass** der Stellring (39) aus Metall, Kunststoff, Keramik, einem Kompositmaterial oder einer Kombination aus diesen Materialien besteht.

18. Kardanische Aufhängevorrichtung (3) nach einem der vorangehenden Ansprüche, **dadurch gekennzeichnet, dass** die Aufhängevorrichtung (3) an der Kamera-Balance-Vorrichtung (1) verschiebbar angeordnet ist.

## Claims

1. Cardanic suspension device (3) for a camera balance device (1) having two hinge axes (G₁, G₂) crossing one another, of which in operation one (G₂) runs vertically and the other (G₁) runs horizontally, and having an axis of rotation (D) which runs through the vertical hinge axis (G₂) and lies vertically to the horizontal hinge axis (G₁), having a hinge output-side attachment element (27), which can be rotated about the vertical hinge axis (G₂), for attachment of the cardanic suspension device (3) to the camera balance device (1), and having a hinge input-side attachment element (25), which can be rotated about the axis of rotation (D), for attachment of the cardanic suspension (3) to a stand, **characterised in that** a centering device (43), with which the vertical hinge axis (G₂) and the axis of rotation (D) can change location relative to one another, is provided between the hinge input-side (25) and the hinge output-side attachment element (27).

2. Cardanic suspension device (3) according to claim 1, **characterised in that** the vertical hinge axis (G₂) can be displaced along the axial extension of the horizontal hinge axis (G₁).

3. Cardanic suspension device (3) according to claim 1 or 2, **characterised in that** the displacement of the vertical hinge axis (G₂) is effected by means of at least one adjusting screw (47).

4. Cardanic suspension device (3) according to claim 3, **characterised in that** the displacement of the vertical hinge axis (G₂) is effected by means of two adjusting screws (47), the longitudinal axes of which extend along the horizontal hinge axis (G₁).

5. Cardanic suspension device (3) according to one of the preceding claims, **characterised in that** a second centering device (37), by means of which the relative position between the output-side attachment element (27) and the camera balance device (1) can be fixed without clearance in this region, is provided in the region of the vertical (G₂) and horizontal hinge axis (G₁).

6. Cardanic suspension device (3) according to claim 5, **characterised in that** attachment of the output-side attachment element (27) to the camera balance device (1) is effected by means of a clamping device (29), which is arranged so that the clamping device (29) and the second centering device (37) are situated at points spaced from one another, preferably at opposite ends, of the hinge output-side attachment element (27).

7. Cardanic suspension device (3) according to one of the preceding claims, **characterised in that** the hinge input-side attachment element (25) is designed as a handle.

8. Cardanic suspension device (3) according to one of the preceding claims, **characterised in that** the hinge output-side attachment element (27) is designed as a handle.

9. Cardanic suspension device according to one of claims 5 to 8, **characterised in that** the second centering device (37) is designed to be adjustable.

10. Cardanic suspension device according to claim 9, **characterised in that** the second centering device (37) is designed to be infinitely adjustable.

11. Cardanic suspension device (3) according to one of the preceding claims, **characterised in that** the hinge output-side attachment element (27) is designed as a straight piece of tube.

12. Cardanic suspension device (3) according to claim 11, **characterised in that** the piece of tube has a circular cross-section.

13. Cardanic suspension device (3) according to one of claims 5 to 12, **characterised in that** the second centering device (37) is formed by an adjusting ring (39), which is provided with a clamping cone, which in turn cooperates with a clamping ring (41).

14. Cardanic suspension device (3) according to one of claims 11 and 12, **characterised in that** the second centering device (37) is formed by an adjusting ring (39), which can be screwed into one end of the piece of tube (27) and which is provided with a clamping cone, which in turn cooperates with a clamping ring (41) arranged on the camera balance device (1).

15. Cardanic suspension device (3) according to one of claims 13 and 14, **characterised in that** the clamping ring (41) consists of plastic, metal, ceramic, a composite material or a combination of these materials.

16. Cardanic suspension device (3) according to one of claims 13 to 15, **characterised in that** at least one slot is formed in the clamping ring (41).

17. Cardanic suspension device (3) according to one of claims 13 to 16, **characterised in that** the adjusting ring (39) consists of metal, plastic, ceramic, a composite material or a combination of these materials.

18. Cardanic suspension device (3) according to one of the preceding claims, **characterised in that** the suspension device (3) is arranged to be displaceable on the camera balance device (1).

## Revendications

1. Dispositif de suspension à la cardan (3) pour un dispositif d'équilibrage de caméra (1)
avec deux axes d'articulation (G₁, G₂) se croisant, dont, en fonctionnement, l'un (G₂) s'étend verticalement et l'autre (G₁) s'étend horizontalement, ainsi qu'avec un axe de rotation (D), s'étendant à travers l'axe d'articulation (G₂) vertical et perpendiculairement à l'axe d'articulation (G₁) horizontal,
avec un élément de fixation (27) situé côté sortie d'articulation, susceptible de tourner autour de l'axe d'articulation (G₂) vertical, pour assurer la fixation du dispositif de suspension (3) à la cardan sur le dispositif d'équilibrage de caméra (1), et
avec un élément de fixation (25) situé du côté entrée de l'articulation, susceptible de tourner autour de l'axe de rotation (D) pour la fixation de la suspension (3) à la cardan sur un pied,
**caractérisé en ce que**
entre l'élément de fixation (25) situé côté entrée de l'articulation et l'élément de fixation (27) situé côté de l'articulation est prévu un dispositif de centrage (43), à l'aide duquel l'axe d'articulation (G₂) vertical et l'axe de rotation (D) sont déplaçables l'un par rapport à l'autre.

2. Dispositif de suspension (3) à la cardan selon la revendication 1, **caractérisé en ce que** l'axe d'articulation (G₂) vertical est déplaçable le long de la direction axiale de l'axe d'articulation (G₁) horizontal.

3. Dispositif de suspension (3) à la cardan selon la revendication 1 ou 2, **caractérisé en ce que** le déplacement de l'axe d'articulation (G₂) vertical se fait à l'aide d'au moins une vis de réglage (47).

4. Dispositif de suspension (3) à la cardan selon la revendication 3, **caractérisé en ce que** le déplacement de l'axe d'articulation (G₂) vertical se fait à l'aide de deux vis de réglage (47), dont les axes longitudinaux s'étendent le long de l'axe d'articulation (G₁) horizontal.

5. Dispositif de suspension (3) à la cardan selon l'une des revendications précédentes, **caractérisé en ce que**, dans la zone de l'axe d'articulation verticale (G₂) et de l'axe d'articulation (G₁) horizontal est prévu un deuxième dispositif de centrage (37), au moyen duquel la position relative, entre l'élément de fixation (27), côté sortie, et le dispositif d'équilibrage de caméra (1), peut être fixée sans jeu dans cette zone.

6. Dispositif de suspension (3) à la cardan selon- la revendication 5, **caractérisé en ce que** la fixation de l'élément de fixation (27), situé côté sortie, sur le dispositif d'équilibrage de caméra (1) se fait à l'aide d'un dispositif de serrage (29), disposé de manière que le dispositif de serrage (29) et le deuxième dispositif de centrage (37) se trouvent en des emplacements espacés l'un de l'autre, de préférence sur des extrémités opposées de l'élément de fixation (27), situé côté sortie de l'articulation,.

7. Dispositif de suspension (3) à la cardan selon l'une des revendications précédentes, **caractérisée en ce que** l' élément de fixation (25), situé côté entrée, dé l'articulation est réalisé sous forme de poignée.

8. Dispositif de suspension (3) à la cardan selon l'une des revendications précédentes, **caractérisé en ce que** l'élément de fixation (27), situé côté sortie de l'articulation, est réalisé sous la forme de poignée..

9. Dispositif de suspension (3) à la cardan selon l'une des revendications 5 à 8, **caractérisé en ce que** le deuxième dispositif de centrage 37 est manoeuvrable.

10. Dispositif de suspension (3) à la cardan selon la revendication 9, **caractérisé en ce que** le deuxième dispositif de centrage (37) est réalisé de façon réglable de manière progressive continue.

11. Dispositif de suspension (3) à la cardan selon l'une des revendications précédentes, **caractérisé en ce que** l'élément de fixation (27), situé côté sortie de l'articulation, est réalisé sous la forme de pièces tubulaires rectilignes.

12. Dispositif de suspension (3) à la cardan selon la revendication 11, **caractérisé en ce que** la pièce tubulaire présente une section transversale en forme de cercle.

13. Dispositif de suspension (3) à la cardan selon l'une des revendications 5 à 12, **caractérisé en ce que** le deuxième dispositif de centrage (37) est formé par une bague de réglage (39), muni d'un cône de serrage, coopérant de son côté avec une bague de serrage (41) .

14. Dispositif de suspension (3) à la cardan selon l'une des revendications 11 et 12, **caractérisé en ce que** le deuxième dispositif de centrage (37) est formé par une bague de réglage (39), pouvant être vissée dans une extrémité de la pièce tubulaire (27) et munie d'un cône de serrage coopérant de son côté avec une bague de serrage (41) disposée sur le dispositif d'équilibrage de camera (1).

15. Dispositif de suspension (3) à la cardan selon l'une des revendications 13 et 14, **caractérisé en ce que** la bague de serrage (41) est formée de matière synthétique, de métal, de céramique, d'un matériau composite ou d'une combinaison de ces matériaux.

16. Dispositif de suspension (3) à la cardan selon l'une des revendications 13 à 15, **caractérisé en ce qu'**au moins une fente est formée dans la bague de serrage (41) .

17. Dispositif de suspension (3) à la cardan selon l'une des revendications 13 à 16, **caractérisé en ce que** la bague de réglage (39) est formée de métal, de matière synthétique, de céramique, d'un matériau composite, ou d'une combinaison de ces matériaux.

18. Dispositif de suspension (3) à la cardan selon l'une des revendications précédentes, **caractérisé en ce que** le dispositif de suspension (3) est disposé de façon déplaçable sur le dispositif d'équilibrage de caméra (1).
